# EUROPEAN PATENT APPLICATION

(11) **EP 1 271 277 A2**
(43) Date of publication of application: **02.01.2003**
(21) Application number: 01202634.0
(22) Date of filing: 09.07.2001
(51) Int. Cl.: G06F 1/00

(54) **Security system and software to prevent unauthorized use of a computing device**

(30) Priority: 26.06.2001 EP 01202459
(71) Applicant: Redstrike B.V., 5301 KK Zaltbommel (NL)
(72) Inventor: Behar, Yaachov, Winchester, MA 01890 (US)
(74) Representative: Visser-Luirink, Gesina, Dr.

(57) **Abstract**

A security system to prevent unauthorized use of a computing device (10) comprises a key device (20) carrying an key identification. Memory means are installed in said computing device for storing a validation record. An interface (11,21) is provided to connect said key device with said computing device, rendering a pathway to exchange said key identification with said computing device. The computing device is loaded with a program to validate said key identification which is embedded in said key device using said validation record. If said key identification and said validation record do not match use of the computing device is inhibited. The key device comprises programmable memory means to store further key information. The computer program is capable of accessing said further key information upon connection of the key device with the computing device. Said further key information enables the computer program to automatically add a validation record associated with said key device and to grant privileges to the key device depending on the contents of said further key information.

## Description

The present invention relates to a security system to prevent unauthorized use of a computing device, said system comprising a key device carrying an key identification; memory means installed in said computing device for storing a validation record; an interface to connect said key device with said computing device and to provide a pathway to exchange said key identification; a program to validate said key identification embedded in said key device using said validation record; and means for inhibiting use of said computing device if said key identification and said validation record do not match. The invention moreover relates to software for preventing unauthorized use of a computing device.

A system of the above kind is known from International patent application WO 00/07088 which is incorporated herein by reference. The known system involves a key device holding a key serial number together with a validation record stored on a hard disk drive of a computer. In order to gain access to the computer, a user has to connect the key device to the computer. Upon connection, a computer program loaded on said computer compares the serial number read from the key device with validation records stored on the computer and only grants access if said serial number matches a serial number stored in a validation record. The computer automatically powers down when no such matching validation record is found.

The computer program of the known system may be loaded in the initial program load firmware basic in/output system (BIOS) for a personal computer in order to attain a low level, secure protection against inadvertent use of the computer. A drawback of the known system is however that for each computer to be secured, one or more validation records have to be stored on the computer concerned in order to render the security system operative. Already in a small to middle size organisation or any other environment with many computers which have to be secured this turns out relatively labourious and too tedious to be carried out by a system manager alone. Leaving the installation of the necessary validation records on the computers entirely to the users themselves, on the other hand, would impose a significant weakness in the security system as a whole.

It is therefore inter alia an object of the present invention to provide a security system of the kind referred to in the opening paragraph which allows, at least to a certain extent, for a distributed installation by the users on the computing devices concerned without compromising the rigidity of the security system as a whole.

To that end a security system of the type described in the opening paragraph according to the present invention is characterized in that the key device comprises programmable memory means to store further key information, in that the computer program is capable of accessing said further key information upon connection of the key device with the computing device and in that said further key information enables the computer program to automatically add a validation record associated with said key device and to grant privileges to the key device depending on the contents of said further key information. The key device in the system according to invention may be programmed and dispatched centrally by a system manager or any other responsible officer in the organisation. The further key information which is thereby stored in the key device enables the key device to register itself onto a computing device once a connection is established. As such the key contains all information necessary to add a complete validation record to the computing device without any further intervention by its user. Although the physical registration may be performed by the user himself, the system manager nevertheless remains fully in control of the privileges which are eventually granted to the user.

A preferred embodiment of the security system is according to the invention characterized in that said further key information comprises a key type identification of said key device and in that said computer program grants privileges to the key device depending on the key type of the key device. Instead of exactly specifying the privileges which may be derived from a key device, specific key types are used which define a pre-defined access profile. The key type is written into the key device memory and enables the computer program to add the appropriate validation record to the computing device, if access is permitted at all. These key types and associated access profiles make it relatively easy for a system manager to correctly program and manage all keys to be issued.

In a special embodiment the security system according to the invention is characterized in that the key type identifies the key device as a prime user key which enables first time access to the computing device. The prime user key is meant for a principal user of the computing device running the computer program. In this embodiment, each computing device should have a principal user and there can only be one principal user per system. Principal or prime users identify themselves as such by a key device of the specific type and may as such gain access to a system onto which so far no (other) principal user has been registered. After such first time access, only the principal user can add or delete further users and accordingly decide who will have access to the computing device and the stored data. Optionally a computing device specific code may be added to the prime user key to limit the above privileges to a specific computing device only. After registration on a specific computing device the prime user key will loose that status and will further act as a normal key. In order to register on a new computing device as a prime user, the key needs to be re-activated as such by the system operator or the like so that security within the system is preserved.

A further embodiment of the security system according to the invention is characterized in that the key type identifies the key device as a normal user key. A normal user key may be programmed for users who need access to a computing device that has already been configured by a principal user as described hereinbefore. A computing device cannot be accessed by means of a normal user key unless a principal user has already been registered on said computing device and has granted access for the normal user key user. As such it is the principal user who grants or denies normal user access to the computing device by adding or deleting the appropriate validation record from a list of normal users of the system. If desired, the number of normal users of the system may be restricted to a certain, pre-defined maximum.

In a further embodiment, the security system according to the invention is characterized in that the key type identifies the key device as a service key which enables access to a restricted portion of the computing device only. To allow service or maintenance operations on a system, the system manager may in this embodiment program a special service key. The service engineer that uses the service key can log onto the system, but has subsequently only limited access to the computing device. User specific, personal data may for instance be hidden, whereas access to general system information may be granted to enable software and hardware updates or any other maintenance by the service engineer. A service key need not be limited to a specific computing device but may instead operate on all computing devices in the organisation or a selected part thereof. Unlike a normal key, the service key does not need to be registered on a computing device to give access and hence no intervention by an end user is required.

Often larger organisations are divided into departments and groups of users which should have mutual access to their computing devices and associated data but not beyond that level. In view thereof, a special embodiment of the security system according to the invention is characterized in that the further key information identifies the key device as a group key, enabling access to computing devices belonging to a specific group. Such a group key allows access to all computing devices that have a principal user belonging to the same group. The principal user of a computing device normally grants such access. However, a principal user belonging to one group cannot grant access to a key device belonging to another group. As a result central control of group access may be secured although the actual registration is carried out by end users.

In larger organisations it may be required to have access to a computing device without the intervention of the principal user involved to allow management of several groups. In view thereof, a further embodiment of the security system according to the invention is characterized in that the further key information identifies the key device as a master key, enabling immediate access to computing devices belonging to one or more selected groups. In this respect immediate access means that such a master key will give access to the computing device concerned without intervention by a principal user, provided that the computing device has a principal user belonging to a group the master key has been issued for. A master key can support a number of different, predefined groups, so that a system manager may control th level of access by a master key holder.

The key device provides a level of security which requires the possession of the device itself. Without a key device no access is possible to a computing device in the system. To attain an even higher degree of security a special embodiment of the security system according to the invention is characterized in that at least one of the further key information and the validation record comprises a personal authorization code to be input by a user of the key device. After having established a connection between the key device and the computing device, requiring the possession of the key device, the user will in this case be prompted for a personal identification or authorization code, requiring knowledge. Only a user having both the possession of the key device and knowledge of the authorization code may gain access to the computing device. This additional security is specifically important in case of loss or theft of a key device.

In a further embodiment, the security system according to the invention is characterized in that the further key information comprises an encryption key which enables the encryption and decryption of information stored on the computing device. Encryption of the relevant data provides a further level of security. In case of unauthorized access to the computing device, bypassing the security offered by the key device itself, the data stored in the computing device, or at least the sensitive part of it, may thus still be protected against misuse by means of a suitable encryption algorithm requiring the decryption key to render the data eligible.

The key device may have an unlimited lifetime or may be issued for a limited period only. To implement this functionality, a further embodiment the security system according to the invention is characterized in that the further key information comprises an access limit defining a maximum number of access permissions granted to the key device. A key device of this kind may for instance be used for a service engineer of user who needs only temporary access to a computing device. After said number of access permissions the key device becomes invalid and useless so it presents no thread anymore to the security of the computing device.

The invention will now described in more detail with reference to a specific embodiment and an accompanying drawing, which shows in:
figure 1 a basic setup of a security system in accordance with one embodiment of the present invention; and in
figure 2 a flowchart of a computer program capable of running on a computing device which is secured by an embodiment of the security system in accordance with the present invention.

The present invention provides a security system to prevent unauthorized access to a computing device. Many kinds of computing devices are suitable to be protected by means of a system according to the invention such as different kinds of computers like personal computers, laptop computers, so called personal digital assistants (PDA or palmtop computer and the like, but also other computing devices like telephone sets and different kinds of electronic domestic appliances lean themself for the present security system. All that is required is an interface to communicate with the device and a microprocessor together with storage means within the device to process an access request. In the embodiment below, a personal computer is taken just as an example without delimiting the present invention to that kind of device.

In order to secure one or more a personal or laptop computers 10, a key device 20 is issued for each device by a system manager or any other person within an organisation responsible for security of the IT environment. The key device 20 consists of a little token which may readily be attached to other keys of the user, like home and car keys, likely to be carried along. Key information 25 is written into the key device by means of appropriate software, available to the system manager only, in order to activate the key device. The key device comprises programmable memory means capable of storing said key information. In this embodiment flash EEPROM is used as storage medium in the key device but also other kinds of non-volatile, one-time or repeatedly programmable memory may be used or even volatile memory provided that the latter is accompanied by a suitable power source, like a battery or the like, in order to avoid data loss.

The key device contains a unique Key ID, which may be provided as manufactured in the form of a unique serial number or may be programmed later on once the key device is activated. Besides a unique ID, the key device of the present example holds one or more Group ID's, an Encryption Key for each group, a Key Type identification and an Active Count number. These data are provided by the system manager as the key is issued and activated. The purpose of the several data fields will become apparent below. Depending on the specific application more data fields may be added to the above described key information or some may possibly be dispensed with as the case may be. The key device 20 comprises a standard infrared interface 21 which operates according to the Ultra Protocol as established by the Infrared Data Association (IrDA) in order to facilitate data communication between a system manager's work station and the key device. The above data are written into the key memory using this interface.

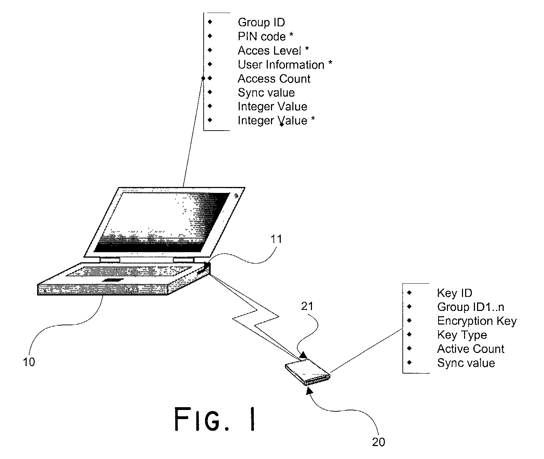

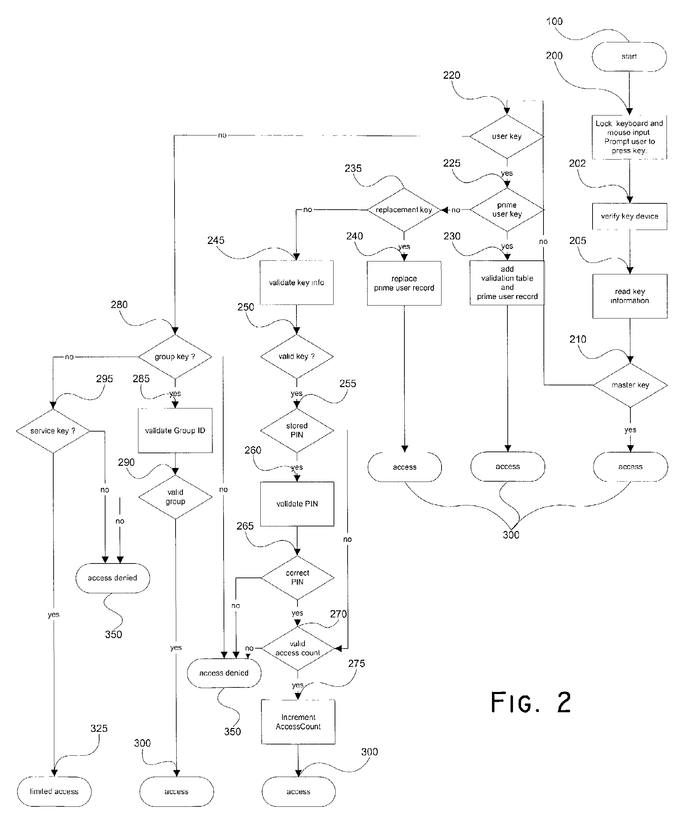

The same interface is used as a communication means with a user system in order to gain access. To this end the computer system is turned on, which causes a computer program associated with the system of the invention to launch as part of the startup procedure, preferably embedded in the BIOS ROM boot sequence. The basic flow of this program is schematically drawn in figure 2. The program starts at 100 and automatically proceeds to a first procedure 200 to lock the keyboard and mouse of the computer system and to prompt the user to connect the key device. The latter is simply accomplished by pointing the key device 20 IrDA interafce 21 to a similar infrared interface 11 on the computer system 10 as indicated in figure 1 and pressing a button on the key device to start data exchange. Once connected, the computer program is capable of accessing and retrieving key information from the key device and will read the key information as part of the program's execution.

First a verification step 202 is carried out to establish whether or not the key device is a valid device for the system concerned, as such it should belong to the same group as the computing device. A specific integer value both in plain form and in encrypted form, using the group's encryption key, has been written to the computing device during set up. At stage 202 this integer value is sent to the key device which upon receipt encrypts the integers value using its own, embedded encryption key. The result is then transmitted to the computing device and there compared to the stored encrypted value. If both encrypted values are identical to one another, the verification step 202 is successful and the program proceeds to step 205, where the key information is actually accessed and transferred to the system. If no valid verification appears to be possible, the program terminates immediately, and no transfer of sensitive key information takes place at all. As such the invention provides unparalleled security.

A rolling code mechanism is used in the key device in order to avoid tampering by means of interception of the communication signal between the key device and the computer system. This mechanism, also known as code hopping, generates a different random code using a non-linear encryption algorithm each time the key device connects to the computer system. This rolling code renders every transmission unique so capturing and re-transmitting the code is useless. The rolling code is a combination of a sync counter and an encryption key using a non-linear encryption algorithm. The sync counter value is the basis of every different code for each transmission and is updated each time the button of the key device is pressed and a connection is made with the computers system. Because of the complexity of such a code hopping principle, already a change in one bit of the sync value will result in a large change in the actual code which is being transmitted, which is hence impossible to predict. The sync value in the key device and a corresponding one on the computer system are synchronized each time a connection is made.

Primarily the key type recorded in the key device determines the further flow of the program. One byte of storage is used within the key device to be able to implement 256 different key types. As such only the six key types listed in the next table are used in this example, but numerous other key type may be envisaged without departing from the scope of the present invention each giving its own functionality and privileges.

| Key type: | Byte code: |
|---|---|
| Master key | 00000000 |
| User keys: | |
| Prime | 00000001 |
| Normal | 00000010 |
| Replacement | 00000011 |
| Group key | 00000100 |
| Service key | 00000101 |

If the program identifies the key device as a master key in step 210, immediate access is granted without any further validation of the key device. The program stops at a first termination 300.

If the key device is not a master key, the validation program continues and checks at point 220 whether the key device is a user key. Different types of user keys may be issued. As such the above table lists a Prime or Principal user key, a Normal user key and a Replacement user key. If the program identifies the key device as any of these types of user keys it continues to step 225 where it checks whether the user key is a prime or principal user key. This key is used for first time access to a system and embodies the core of the present invention. Each computing device within the system of the present invention has its own principal user being the user that logged onto the device with a prime user key when the device was not allocated yet. Upon connecting the principal user key the program will identify the key device as such in step 225 and proceeds to step 230 to add validation table to the system. This validation table is written to hard disk and contains a record for each user which is allowed access to the system. Each validation record holds the user information shown in figure 1 in conjunction with the computer system and comprises such a record associated with the principal user ab initio. Afterwards, the principal user may add as many additional users to the system as desired, using a separate software tool, provided these additional users are in the same group as the principal user. This privilege of the principal user emerges from the access level which is record in the validation table for each user and is set to full access as a system administrator for the principal user. The group ID associated with the principal user is copied from the prime user key and determines which other user may be added to the system on the discretion of the principal user. After the validation table has been added the principal user is given access to the system and the key device independently sets the key type byte to that of a normal user key so that the principal user key can be used only once to allocate a computer system. Accordingly, without having to interfere with the installation of key devices on the system, a system manager responsible for issuing the key devices, keeps control of the security within the system.

A special kind of key device is the so called replacement key which is used in case of loss or theft of the principle user key of a system. The presence of this type of key is checked at stage 235 of the program. A replacement key is programmed by the system manager with the same group number and encryption key as that of the lost prime user key. The prime user cmay then use this replacement key to gain access to his own system. After being verified en found valid in step 202 the program proceeds to step 240 where the existing, original prime user record is deleted and replaced by the appropriate record information of the replacement key. At the end the replacement key sets its own type identification to that of a prime user key. From now on the replacement key behaves like a prime user key and the original prime user key has become inoperative.

If the user key device is not a principal user key or a replacement key but a normal user key or a replacement key, the computer program will try to verify the key information at stage 245. As such it will first search the system for a validation table. If no such table is found, access is denied and the program terminates at 350. If on the other hand a validation tables exists on the system the computer program will look for the appropriate user record in order to validate the key device. This is done by using the encryption key written in the key device. This key is used to decrypt the PIN-code, access level, encryption key and possibly other user information which are stored in the user record in encrypted form. After decrypting this information using the encryption key which is retrieved from the key device, the computer program establishes in step 250 whether the result is sensible or not. In the latter case access is denied leading to termination 350 of the program. Otherwise the program continues to step 255 to check whether or not a PIN code is stored in the user record. It should be noted that the encryption key does not reside in permanent memory on the computing device but in the key device only. Once the key device has been verified the encryption key of the key device is written into volatile memory of the computing device, where it is at the disposal of the computing device for the duration of a session. Upon power down or a power save mode the encryption key is erased from the computing device's memory and should again be transferred to the computing device to gain unlimited access, using the key device. In this manner it is practically impossible to retrieve the encryption key from in case of possession of merely an inactive computing device, while all sensitive data on the computing device reside in encrypted form.

A PIN code provides additional security and may be recorded once a user is added to the system, at the choice of that user. With a PIN code stored in the system the user needs something to have, i.e. the key device, together with something to know, i.e. the PIN-code, in order to gain access to the system. As the PIN-code is stored in encrypted form it is not possible for other users to retrieve the PIN code from the system itself after having gained access to the validation table. The invention, hence, provides an extreme high degree of security. After the PIN code has been validated in step 260 and found valid in step 265 the program proceeds to step 270. If the PIN-code is found invalid the program terminates at 350 and access is denied. If no PIN-code has been recorded for the specific user, the validation steps 260,265 are by-passed and the program proceeds to step 270 without further action.

At step 270 the program establishes whether the key device has expired yet or not. This is done by means of the access count which may have been written to the key device when it was issued and which determines the maximum times of access to the system by means of that key. The user record comprises an Access Count field in order to record each time access is given to that user. If in step 270 the Access Count read from the user record exceeds the Active Count, access is denied and the program terminates at 350, other wise the Access Count is incremented by one in step 275 and access is granted at termination 300.

The encryption key retrieved from the user's key device is indispensable for decrypting (and encrypting (selected) data on the computing device. Accordingly, even if all security steps of the access program according to the invention are bypassed, the (sensitive) data residing on the system are still protected. Because the highly sensitive encryption key need not be stored on the computing device within the system of the invention, the system is ever protected against abuse by intruders not having an appropriate key device.

Besides user keys special key may be issued for special users. As such a group key allows access to all systems in one or more groups, which are identified as such by means of a collection of group ID's which have been written into the key device. A group key may be issued in order to allow management of an entire group of computing devices. If the key device is a group key the program immediately branches to step 280 at verification of the key device in step 220. In the subsequent validation step 285 the program checks whether a validation table exist and the group ID listed in the validation table in conjunction with the principal user, is actually present in the collection of group ID's retrieved from the group key device. Moreover, the group key should contain the encryption key of each group for which it is issued. If all affirmative, access is granted and the program terminates at 300, otherwise access is denied at 350. Optionally a PIN code may be required to gain group access, in which case the computer program will comprise the necessary validation procedures between step 290 and termination 300.

To allow service or maintenance operations on a system, a system manager can program a special service key. A service engineer that uses the service key can log into a system but cannot access the data residing on the system in an encrypted volume. This is implemented in step 295 of the program. If the key device is identified as a service key access is given. Because the service key is only meant to be used for service operation on the computing device it does not contain an appropriate encryption key to access the encrypted data on the system. The service key accordingly has only limited access at termination 325 of the program. If desired a service key may be limited to one or more groups and may be accompanied by a PIN-code, in which case the program will have the appropriate verification steps between steps 295 and 325.

If the computer program does not identify the key device as a service key in step 295 it will terminate at 350. The system according to the invention is hence a closed system in that only the key types known to the computer program may give access to the system, provided the have the right credentials, and others simply won't. The invention thereby provides for a security system which may be managed from a distance by a system manager without losing security control.

Although the invention has been elucidated to more extend in conjunction with the embodiment described hereinbefore, it will be appreciated that the invention is not at all limited to the specific example given. On the contrary, numerous other embodiments and examples are feasible for a skilled person without departing from the scope and the spirit of the present invention.

## Claims

1. A security system to prevent unauthorized use of a computing device, said system comprising a key device carrying an key identification; memory means installed in said computing device for storing a validation record; an interface to connect said key device with said computing device and to provide a pathway to exchange said key identification; a program to validate said key identification embedded in said key device using said validation record; and means for inhibiting use of said computing device if said key identification and said validation record do not match **characterized in that** the key device comprises programmable memory means to store further key information, **in that** the computer program is capable of accessing said further key information upon connection of the key device with the computing device and **in that** said further key information enables the computer program to automatically add a validation record associated with said key device and to grant privileges to the key device depending on the contents of said further key information.

2. A security system according to claim 1 **characterized in that** said further key information comprises a key type identification of said key device and **in that** said computer program grants privileges to the key device depending on the key type of the key device.

3. A security system according to claim 2 **characterized in that** the key type identifies the key device as a prime user key which enables first time access to the computing device.

4. A security system according to claim 2 **characterized in that** the key type identifies the key device as a normal user key.

5. A security system according to claims 2 **characterized in that** the key type identifies the key device as a service key which enables access to a restricted portion of the computing device only.

6. A security system according to any of the preceding claims **characterized in that** the further key information identifies the key device as a group key, enabling access to computing devices belonging to a specific group.

7. A security system according to claim 6 **characterized in that** the further key information identifies the key device as a master key, enabling immediate access to computing devices belonging to one or more selected groups.

8. A security system according to any one of the preceding claims **characterized in that** at least one of the further key information and the validation record comprises a personal authorization code to be input by a user of the key device.

9. A security system according to any one of the preceding claims **characterized in that** the further key information comprises an encryption key which enables the encryption and decryption of information stored on the computing device.

10. A security system according to claim 9 **characterized in that** the encryption key is stored in the key device permanently and on the computing device only temporary for the duration of a session.

11. A security system according to anyone of the preceding claims **characterized in that** the further key information comprises an access limit defining a maximum number of access permissions granted to the key device.

12. A security device according to anyone of the preceding claims **characterized in that** said interface comprises a wireless connection between the key device and the computing device.

13. A security system according to any one of the preceding claims **characterized in that** key device and said computing device are capable of encrypted data exchange over said interface.

14. Software to prevent unauthorized access to a computing device as used in the system according to anyone of the preceding claims.

15. Software according to claim 14 comprising means to identify a key device connected to said computing device and to retrieve a specific key information from said key device, in which said key information determines at least part of a further execution of the software's program code.

16. Software according to claim 14 or 15 **characterized in that** said key information enables the computer program to automatically add a validation record associated with said key device and to grant privileges to the key device depending on the contents of said key information.
